# EUROPÄISCHE PATENTANMELDUNG

(11) **EP 4 624 035 A1**
(43) Veröffentlichungstag der Anmeldung: **01.10.2025**
(21) Anmeldenummer: 24165771.7
(22) Anmeldetag: 25.03.2024
(51) Int. Cl.: B01J 8/00, B01J 8/02, B01J 19/00, C01B 3/34

(54) **TEMPERATURREGELEINRICHTUNG IN EINEM ABHITZEKESSEL**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: ULBER, Dieter, 60439 Frankfurt (DE); BRUDER, Frank, 60439 Frankfurt (DE)
(74) Vertreter: Air Liquide

(57) **Zusammenfassung**

Anordnung (1) umfassend einen Reaktor (2), einen Abhitzekessel (3), einen Stellantrieb (4), eine Welle (5), ein Wellendichtelement (6), ein axiales Lager (7), und eine Temperaturregeleinrichtung (8), wobei der Abhitzekessel (3) an den Reaktor (2) angebunden ist, wobei die Welle (5), das Wellendichtelement (6) und das axiale Lager (7) auf einer gemeinsamen Achse (9) angeordnet sind, wobei der Abhitzekessel (3) eine Öffnung (10) aufweist, durch welche die Welle (5) unter Abdichtung durch das Wellendichtelement (6) hindurchgeführt ist, wobei der Stellantrieb (4) außerhalb des Abhitzekessels (3) angeordnet ist, wobei die Temperaturregeleinrichtung (8) innerhalb des Abhitzekessels (3) angeordnet ist, wobei der Stellantrieb (4) an einem ersten Ende (11) mit der Welle (5) gekoppelt ist, und wobei der Stellantrieb (4) dazu eingerichtet ist, die Welle (5) rotatorisch anzutreiben, wobei die Temperaturregeleinrichtung (8) an einem zweiten Ende (12) mit der Welle (5) gekoppelt ist und dazu eingerichtet ist, durch rotatorische Bewegung der Welle (5) eingestellt zu werden, wobei das axiale Lager (7) dazu eingerichtet ist, einer Bewegung der Welle (5) in Richtung auf das erste Ende (11) der Welle (5) entgegenzuwirken.

## Beschreibung

Die Erfindung betrifft eine Anordnung mit einem Reaktor, in welchem insbesondere ein Synthesegas für die Methanolsynthese erzeugt werden kann. Weiterhin betrifft die Erfindung ein Verfahren zum Betrieb dieser Anordnung.

Bekannt sind Verfahren zur industriellen Herstellung von Synthesegas für die Methanolsynthese durch heterogen-katalytische Umsetzung von gasförmigen oder flüssigen, kohlenstoffhaltigen Einsatzstoffen in geeigneten Reaktoren. Synthesegase können unterschiedliche Gasgemische sein, die unter anderem Wasserstoff und Kohlenoxide enthalten.

Die in Reaktoren entstehenden Prozessgase, bestehend vorwiegend aus Wasserstoff, Kohlenoxide und Wasserdampf und aus nicht umgesetzten Kohlenwasserstoffen wie Methan, werden anschließend in Abhitzekesseln abgekühlt. Abhitzekessel und Verfahren zur Abkühlung von Synthesegas sind bekannt.

Bekannt sind auch Regelvorrichtungen zur Temperaturregelung in Abhitzekesseln. Dabei wird ein teilgekühlter Prozessgasstrom durch ein großes oder mehrere kleinere Bypassrohre geführt. Der gekühlte Prozessgasstrom wird mit dem teilgekühlten Prozessgasstrom aus dem Bypassrohr oder den den Bypassrohren vermischt, um eine gewünschte Abgastemperatur des Abhitzekessels einzustellen.

Die Bedeutung einer Regelvorrichtung für eine Abgastemperatur liegt darin, dass eine defekte Regeleinrichtung einerseits eine zu niedrige Abgastemperatur oder anderseits eine deutlich erhöhte Abgastemperatur zur Folge haben kann. Eine zu niedrige Abgastemperatur kann nachgeschaltete Komponenten und Prozesse zur Synthesegaserzeugung, die eine Minimaltemperatur benötigen, beeinträchtigen. Eine erhöhte Abgastemperatur kann ebenfalls nachgeschaltete Komponenten und Prozesse zur Synthesegaserzeugung beeinträchtigen. Weiterhin können durch eine erhöhte Abgastemperatur das Material im Abhitzekessel oder nachfolgende Komponenten durch *"Metal dusting"* korrodieren. Diese Art der Korrosion äußert sich in einer Zersetzung von Metall zu Metallpulver. Insbesondere unter einer Kohlenmonoxid-Atmosphäre kann es zum Metal dusting kommen.

Bekannt ist auch, dass sich die Welle zur Regelvorrichtung während des Betriebs durch höhere Temperaturen ausdehnt. Dadurch kann die notwendige Kraft zum Verstellen der Welle durch Reibkräfte erhöht werden oder die Regeleinrichtung vollständig blockieren.

Die vorstehendend beschriebenen Probleme aus dem Stand der Technik zur Methanolsynthese ergeben sich aus der Konstruktion des verwendeten Equipments. Diese Probleme treten daher in ähnlicher Weise auch dann auf, wenn vergleichbares Equipment zu einem anderen Zweck genutzt wird, beispielsweise zur Herstellung einer anderen Substanz. Die Synthesegaserzeugung für die Methanolsynthese ist daher nur als Beispiel zu betrachten.

Aufgabe der vorliegenden Erfindung ist es, ausgehend vom beschriebenen Stand der Technik eine Temperatur an einem Auslass eines Abhitzekessels zuverlässig regulieren zu können.

Diese Aufgabe wird gelöst mit den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird eine Anordnung vorgestellt, welche einen Reaktor, einen Abhitzekessel, einen Stellantrieb, eine Welle, ein Wellendichtelement, ein axiales Lager, und eine Temperaturregeleinrichtung umfasst. Hierbei ist der Abhitzekessel an den Reaktor angebunden. Die Welle, das Wellendichtelement und das axiale Lager sind auf einer gemeinsamen Achse angeordnet. Der Abhitzekessel weist eine Öffnung auf, durch welche die Welle unter Abdichtung durch das Wellendichtelement hindurchgeführt ist. Der Stellantrieb ist außerhalb des Abhitzekessels angeordnet. Die Temperaturregeleinrichtung ist innerhalb des Abhitzekessels angeordnet. Der Stellantrieb ist an einem ersten Ende mit der Welle gekoppelt und dazu eingerichtet, die Welle rotatorisch anzutreiben. Die Temperaturregeleinrichtung ist an einem zweiten Ende mit der Welle gekoppelt und ist dazu eingerichtet, durch rotatorische Bewegung der Welle eingestellt zu werden. Das axiale Lager ist dazu eingerichtet, einer Bewegung der Welle in Richtung auf das erste Ende der Welle entgegenzuwirken.

Die Anordnung ist vorzugsweise als eine Reaktoranordnung mit einer Temperaturregulierung ausgebildet. Die Anordnung kann zur Durchführung einer chemischen Reaktion eingerichtet sein. Bei der chemischen Reaktion kann es sich um eine exotherme oder eine endotherme Reaktion handeln. Besonders geeignet ist die Anordnung für die Methanolsynthesegaserzeugung. Allerdings können die hierin beschriebenen Vorteile auch bei zahlreichen anderen chemischen Reaktionen erzielt werden. Die Vorteile können sogar erzielt werden, wenn die Anordnung nicht als Reaktoranordnung genutzt wird und in der Anordnung keine chemische Reaktion abläuft. Die Anordnung kann allgemein auch als Wärmetauscher ausgebildet sein.

Die Anordnung umfasst einen Abhitzekessel, der an einen Reaktor angebunden ist.

Der Reaktor kann dazu eingerichtet sein, Synthesegas aus einem kohlenwasserstoffhaltigen Einsatzstoff zu erzeugen. Vorzugsweise umfassen Einsatzstoffe gasförmige oder flüssige Kohlenstoffe. Die dabei entstehende Wärme kann zumindest teilweise im Abhitzekessel entfernt werden.

Vorzugsweise ist der Reaktor zur Methanolsynthesegaserzeugung geeignet. Insbesondere kann der Reaktor für die Dampfreformierung geeignet sein. Bevorzugt kann der Reaktor für die autotherme Reformierung geeignet sein. Besonders bevorzugt ist der Reaktor für die kombinierte Reformierung geeignet, wobei die kombinierte Reformierung eine primäre Dampfreformierung und eine nachgeschaltete sekundäre autotherme Reformierung umfasst.

Im Reaktor können Reaktionsedukte zu Methanolsynthesegas umgesetzt werden. Methanolsynthesegas umfasst vorzugsweise Wasserstoff, Kohlenmonoxid und Kohlenstoffdioxid als Reaktionsprodukte. Bevorzugt umfasst Methanolsynthesegas ein Gemisch aus Wasserstoff und Kohlenmonoxid. Besonders bevorzugt umfasst Methanolsynthesegas ein Gemisch aus Wasserstoff und Kohlenstoffdioxid. Weiterhin kann das Methanolsynthesegas Inertgase enthalten. Insbesondere kann das Methanolsynthesegas Methan als Inertgas enthalten. Bevorzugt enthält das Methanolsynthesegas Stickstoff als Inertgas.

Vom Reaktor können die Reaktionsprodukte als ein Prozessgasstrom zum Abhitzekessel geleitet werden. Im Abhitzekessel kann der Prozessgasstrom gekühlt werden. Hierfür kann der Abhitzekessel mehrere Wärmeübertragungsrohre aufweisen, durch welche der Prozessgasstrom geleitet werden kann. Ein Kühlmittel kann um die Wärmeübertragungsrohre geleitet werden. Der Prozessgasstrom kann beim Durchströmen der Wärmeübertragungsrohre die Wärmeenergie über die Rohrwand der Wärmeübertragungsrohre auf das Kühlmittel übertragen. Flüssiges Kühlmittel im Abhitzekessel kann dabei verdampfen, so dass das Kühlmittel im Abhitzekessel zweiphasig sein kann. Das Kühlmittel kann über einen Kühlmittelauslass aus dem Abhitzekessel entfernt werden. Vorzugsweise ist das Kühlmittel Wasser.

Alternativ kann Wärmeenergie im Abhitzekessel von dem Kühlmittel über die Rohrwand der Wärmeübertragungsrohre auf den Prozessgasstrom in den Wärmeübertragungsrohren übertragen werden.

Vorzugsweise ist der Abhitzekessel ein länglicher Hohlkörper. Der Abhitzekessel kann ein zylindrischer Metallbehälter sein, der dazu geeignet sein kann, die Wärmeübertragungsrohre zu umfassen. Der Abhitzekessel kann Anschlüsse und Verbindungen aufweisen, so dass die Wärmeübertragungsrohre fluidtechnisch angeschlossen werden können. Von einem Einlass kann der Prozessgasstrom über eine Einlasskammer auf die Wärmeübertragungsrohre aufgeteilt werden. Stromabwärts von den Wärmeübertragungsrohren wird der Prozessgasstrom in einer Auslasskammer des Abhitzekessels gesammelt und zum Auslass des Abhitzekessel geführt. Weiterhin kann der Abhitzekessel Anschlüsse und Verbindungen aufweisen, so dass in einen Mantelraum außerhalb und zwischen den Wärmeübertragungsrohren das Kühlmittel oder sonstiges Medium in den Abhitzekessel eingeleitet und wieder abgeleitet werden kann. Der Mantelraum kann fluidtechnisch angeschlossen werden.

Die Temperaturregeleinrichtung ist innerhalb des Abhitzekessels angeordnet. Vorzugsweise ist die Temperaturregeleinrichtung zumindest teilweise in der Auslasskammer des Abhitzekessels angeordnet. Die Temperaturregeleinrichtung kann die Temperatur am Auslass des Abhitzekessels einstellen. Auf welche Weise dies erfolgt, ist für die Vorteile der hierin beschriebenen Anordnung weitgehend unerheblich. Die Vorteile lassen sich immer dann erzielen, wenn die Temperaturregeleinrichtung wie nachfolgend beschrieben über eine Welle einstellbar ist. Entsprechend gibt es zahlreiche verschiedene Möglichkeiten, die Temperaturregeleinrichtung auszugestalten.

Vorzugsweise umfasst die Temperaturregeleinrichtung ein Bypassrohr, womit zumindest ein Teil des Prozessgasstroms getrennt von den Wärmeübertragungsrohren geleitet werden kann. Das Bypassrohr kann in die Auslasskammer des Abhitzekessels hineinragen. Die Temperaturregeleinrichtung kann auch mehrere Bypassrohre umfassen, womit zumindest ein Teil des Prozessgasstroms getrennt von den Wärmeübertragungsrohren geleitet werden kann. Die Bypassrohre können in die Auslasskammer des Abhitzekessels hineinragen.

Bevorzugt ist das Bypassrohr so ausgeführt, dass kein direkter Wärmeaustausch mit dem Kühlmittel stattfindet. Das Prozessgas kann dann als ein Teil des ungekühlten Prozessgasstroms als ein ungekühlter Prozessgasstrom getrennt von den Wärmeübertragungsrohren in dem Bypassrohr geleitet werden.

Besonders bevorzugt ist das Bypassrohr oder mehrere Bypassrohre so ausgeführt, dass ein Kühlmittel um das Bypassrohr oder mehrere Bypassrohre geleitet wird. Der zunächst ungekühlte Prozessgasstrom kann beim Durchströmen des Bypassrohrs oder der Bypassrohre einen Teil der Wärmeenergie über die Rohrwand des Bypassrohrs oder der Bypassrohre auf das Kühlmittel übertragen. Hierbei kann insbesondere der Wärmeübergang des Bypassrohrs oder der Bypassrohre auf das Kühlmittel niedriger sein als der Wärmeübergang der Wärmeübertragungsrohre. Das Prozessgas kann dann als ein Teil des ungekühlten Prozessgasstroms als ein teilgekühlter Prozessgasstrom getrennt von den Wärmeübertragungsrohren in das Bypassrohr oder die Bypassrohre geleitet werden. Bevorzugt ist der innere Durchmesser des Bypassrohrs oder der Bypassrohre größer als der Durchmesser der Wärmeübertragungsrohre. Nachfolgendes kann auch für mehrere Bypassrohre angewandt werden.

Vorzugsweise umfasst die Temperaturregeleinrichtung eine Regelklappe oder eine Drossel, ein Kolbenstopfen oder eine Drosselklappe, um den Prozessgasstrom durch das Bypassrohr zu regeln.

Die Temperaturregeleinrichtung kann einen Durchfluss von ungekühltem oder teilgekühltem Prozessgas durch das Bypassrohr einstellen. Beispielsweise kann die Temperaturregeleinrichtung den Durchfluss durch das Bypassrohr in einer ersten Einstellung vollständig verhindern, so dass kein ungekühlter oder teilgekühlter Prozessgasstrom das Bypassrohr durchströmt. Die Temperaturregeleinrichtung kann den Durchfluss durch das Bypassrohr in einer zweiten Einstellung auch möglichst wenig behindern, so dass ein bestimmter Anteil des ungekühlten oder teilgekühlten Prozessgasstroms das Bypassrohr durchströmt. Die Temperaturregeleinrichtung kann den Durchfluss des ungekühlten oder teilgekühlten Prozessgasstroms auch auf eine Einstellung zwischen der ersten Einstellung und der zweiten Einstellung regeln. Dabei kann die Regeleinrichtung direkt auf den ungekühlten oder teilgekühlten Prozessgasstrom und/oder auf den gekühlten Prozessgasstrom wirken. Der ungekühlte oder teilgekühlte Prozessgasstrom kann mit dem durch die Wärmeübertragungsrohre gekühlten Prozessgasstroms in der Auslasskammer vor dem Auslass aus dem Abhitzekessel vermischt werden.

Die Temperaturregeleinrichtung kann die Temperatur des Prozessgasstroms am Auslass des Abhitzekessels einstellen.

Die Temperaturregeleinrichtung ist an einem zweiten Ende mit der Welle gekoppelt und ist dazu eingerichtet, durch rotatorische Bewegung der Welle eingestellt zu werden.

Das kann bedeuten, dass beispielsweise eine Regelklappe der Temperaturregeleinrichtung im Bypassrohr so rotiert wird, dass der Durchfluss des ungekühlten oder teilgekühlten Prozessgasstroms zwischen der ersten und der zweiten Einstellung reguliert werden kann. Allerdings ist es nicht zwingend erforderlich, dass die Temperaturregeleinrichtung eine Regelklappe aufweist. Um die hierin beschriebenen Vorteile zu erzielen, genügt es, dass die Temperaturregeleinrichtung derart ausgebildet ist, dass über den Drehwinkel der Welle die Temperatur geregelt werden kann.

Vorzugsweise ist die Welle und/oder die Temperaturregeleinrichtung aufgelagert, insbesondere radial gelagert und dazu eingerichtet, Kräfte quer zu der Achse aufzunehmen. Das hat den Vorteil, dass Reibungskräfte und Fluidkräfte des Prozessgasstroms auf die Welle und/oder die Temperaturregeleinrichtung aufgenommen werden können und die Bauteile nicht beschädigt werden.

Vorzugsweise weist der Prozessgasstrom am Auslass des Abhitzekessels im Betrieb eine Temperatur im Bereich von 200°C bis 650°C auf. Bevorzugt weist der Prozessgasstrom am Auslass des Abhitzekessels im Betrieb eine Temperatur im Bereich von 300°C bis 550°C auf. Besonders bevorzugt weist der Prozessgasstrom am Auslass des Abhitzekessels im Betrieb eine Temperatur im Bereich von 400°C bis 500°C auf.

Der Abhitzekessel weist eine Öffnung auf, durch welche die Welle unter Abdichtung durch das Wellendichtelement hindurchgeführt ist.

Um den Abhitzekessel gegenüber der Umgebung abzudichten, können von dem Wellendichtelement umlaufend radiale Kräfte auf die Welle aufgebracht werden.

Das Wellendichtelement dient vorzugsweise dazu, zu verhindern, dass Gas aus dem mit Druck versehenen Abhitzekessel durch die Öffnung entweicht. Entweichendes Gas kann nicht nur giftig sein, sondern auch eine explosive Mischung zusammen mit Luft ergeben. Das Wellendichtelement kann sicherheitsrelevant sein und kann der Arbeitssicherheit dienen.

Die Welle, das Wellendichtelement und das axiale Lager sind auf einer gemeinsamen Achse angeordnet. Dadurch kann die abdichtende Wirkung des Wellendichtelements erhalten werden.

Vorzugsweise weist das Wellendichtelement einen Freiheitsgrad in axialer Richtung und einen Freiheitsgrad in rotatorischer Richtung um die Achse auf.

Der Stellantrieb ist außerhalb des Abhitzekessels angeordnet. Der Stellantrieb ist an einem ersten Ende mit der Welle gekoppelt und dazu eingerichtet, die Welle rotatorisch anzutreiben.

Vorzugsweise umfasst der Stellantrieb einen manuellen Antrieb. Bevorzugt umfasst der Stellantrieb einen pneumatischen Antrieb. Besonders bevorzugt umfasst der Stellantrieb einen pneumatischen Antrieb und einen manuellen Antrieb. Hierfür ist der Stellantrieb vorzugsweise unmittelbar mit der Welle gekoppelt. Bevorzugt ist der Stellantrieb über einen Hebel mit der Welle gekoppelt. Besonders bevorzugt ist der Stellantrieb über ein Getriebe mit der Welle gekoppelt.

Ein Stellantrieb, der außerhalb des Abhitzekessels angeordnet ist, hat den Vorteil, dass die Welle beabstandet vom Abhitzekessel angetrieben werden kann. Dadurch kann die Sicherheit für den Bediener erhöht werden und der Stellantrieb wird nicht den Temperatur- und Korrosionsbedingungen des Prozessgases ausgesetzt.

Das axiale Lager ist dazu eingerichtet, einer Bewegung der Welle in Richtung auf das erste Ende der Welle entgegenzuwirken. Vorzugsweise weist das axiale Lager einen Freiheitsgrad in rotatorischer Richtung um die Achse auf.

Das axiale Lager kann eine erste Seite und eine gegenüberliegende zweite Seite aufweisen. Vorzugsweise ist das axiale Lager als ein Gleitlager ausgestaltet. Bevorzugt ist das axiale Lager als ein Wälzlager ausgestaltet mit Wälzkörpern zwischen der ersten Seite und der zweiten Seite. Eine Kraft ist von der ersten Seite über die Wälzkörper auf die zweite Seite übertragbar und umgekehrt.

Das axiale Lager kann dazu eingerichtet sein, eine Bewegung der Welle in Richtung auf das erste Ende der Welle entgegenzuwirken, wobei eine Druckkraft in Richtung auf das erste Ende der Welle durch einen Druckunterschied zwischen Abhitzekessel und Umgebung im Betrieb hervorgerufen werden kann.

Die Druckkraft kann aus der Druckdifferenz zwischen dem Abhitzekessel und der Umgebung multipliziert mit der Fläche, auf die die Druckdifferenz wirkt, berechnet werden.

Vorzugsweise weist der Prozessgasstrom im Abhitzekessel eine Druckdifferenz von mindestens 20 bar zur Umgebung auf. Bevorzugt weist der Prozessgasstrom im Abhitzekessel eine Druckdifferenz von mindestens 40 bar zur Umgebung auf.

Das axiale Lager kann auch dazu eingerichtet sein, eine Bewegung der Welle in Richtung auf das erste Ende der Welle aufgrund von einer Temperaturausdehnung der Welle entgegenzuwirken.

Das axiale Lager kann zusätzlich auch dazu eingerichtet sein, einer Bewegung der Welle in Richtung auf das zweite Ende der Welle entgegenzuwirken.

Mit der Anordnung kann eine Temperatur eines Prozessgasstroms zuverlässig geregelt werden. Zu diesem Zweck kann die Anordnung gewährleisten, dass die Temperaturregeleinrichtung im Betrieb trotz einer Druckkraft aufgrund eines Druckunterschieds des Prozessgasstroms im Abhitzekessel zur Umgebung sicher und zuverlässig eingestellt werden kann. Dies wird mit dem axialen Lager erreicht.

Erfindungsgemäß wurde die Erkenntnis gewonnen, dass bei Lösungen des Standes der Technik ein Druckunterschied zwischen Abhitzekessel und Umgebung eine Drucckraft in Richtung des niedrigeren Drucks der Umgebung auf die Welle ausübt. Diese Kraft nach außen hin führt zu einer signifikanten Reibungskraft, die entgegen einer Drehbewegung der Welle arbeitet. Diese Reibungskraft kann so hoch sein, dass die Welle sich nicht mehr drehen lässt. Durch das axiale Lager kann dieser Effekt reduziert oder sogar ganz vermieden werden.

In einer bevorzugten Ausführungsform der Anordnung ist das axiale Lager innerhalb des Abhitzekessels angeordnet, und das axiale Lager ist zwischen dem Wellendichtelement und der Temperaturregeleinrichtung angeordnet.

Diese Ausführungsform hat den Vorteil, dass im Betrieb eine Druckkraft aufgrund eines Druckunterschieds zwischen Abhitzekessel und Umgebung über das axiales Lager aufgenommen werden kann. Dadurch, dass das axiale Lager zwischen dem Wellendichtelement und der Temperaturregeleinrichtung angeordnet ist, wird verhindert, dass eine axiale Kraft aufgrund des Druckunterschieds auf das Wellendichtelement wirkt. Vorzugsweise wirkt von der Welle keine oder eine vernachlässigbare axiale Kraft auf das Wellendichtelement. Das gewährleistet eine zuverlässigere Abdichtung des Abhitzekessels zur Umgebung durch das Wellendichtelement.

Weiterhin hat diese Ausführungsform den Vorteil, dass die Temperaturregeleinrichtung auch im Betrieb zuverlässig die Temperatur regeln kann und die Welle im Betrieb trotz der axialen Druckkraft auf die Welle nicht blockiert.

In einer weiteren bevorzugten Ausführungsform der Anordnung sind das Wellendichtelement und das axiale Lager voneinander beabstandet auf der Welle angeordnet.

Diese Ausführungsform hat den Vorteil, dass eine axiale Kraft auf das axiale Lager nicht in das Wellendichtelement geführt wird und das Wellendichtelement keine axiale Kraft abführt.

In einer weiteren bevorzugten Ausführungsform der Anordnung ist das Wellendichtelement in der Öffnung des Abhitzekessels angeordnet. Durch die Öffnung ist die Welle unter Abdichtung durch das Wellendichtelement hindurchgeführt.

Diese Ausführungsform hat den Vorteil, dass das Wellendichtelement besonders platzsparend angebracht ist.

Bevorzugt ist die Kombination dieser Ausführungsform mit den beiden vorherigen Ausführungsformen.

Dies hat den besonderen Vorteil, dass die Aufnahme von axialen Kräften durch das axiale Lager und die Abdichtung des Abhitzekessels durch das Wellendichtelement besonders platzsparend und zuverlässig ist. Dadurch wird die Gasströmung im Abhitzekessel möglichst wenig gestört und es entstehen weniger Strömungstotzonen im Abhitzekessel.

In einer weiteren bevorzugten Ausführungsform der Anordnung ist das axiale Lager mit der ersten Seite an einem Anschlag der Welle angeordnet und mit der zweiten Seite mittels des Abhitzekessels gehalten.

Der Vorteil dieser Ausführungsform ist, dass das axiale Lager eine Kraft in Richtung des ersten Endes der Welle auf den Abhitzekessel übertragen kann. Weiterhin hat diese Ausführungsform den Vorteil, dass die Welle zwischen dem ersten Ende der Welle und dem axialen Lager keine Kraft aufgrund eines Druckunterschieds führt. Somit wird eine axiale Kraft auf das Wellendichtelement und den Stellantrieb verhindert oder zumindest reduziert. Eine aus einer axialen Kraft resultierende Reibkraft, die der Rotationsbewegung im Stellantrieb entgegen gerichtet ist, kann auf diese Weise vermieden oder zumindest reduziert werden.

In einer weiteren bevorzugten Ausführungsform der Anordnung ist das Wellendichtelement eine Stopfbuchse. Die Stopfbuchse umfasst eine Stopfbuchspackung und eine Stopfbuchsbrille, wobei ein Freiraum zwischen der Welle und einer Buchse über die Stopfbuchspackung abgedichtet ist. Vorzugsweise ist die Buchse kraftschlüssig mit dem Abhitzekessel verbunden. Die Buchse kann auch Teil des Abhitzekessels sein.

Der Vorteil dieser Ausführungsform ist, dass der Abhitzekessel gegenüber der Umgebung zuverlässig abgedichtet wird, die Welle jedoch weiterhin rotieren kann.

In einer alternativen Ausführungsform ist das axiale Lager auf der Welle zwischen Stellantrieb und Wellendichtelement angebracht. Das axiale Lager ist mit der ersten Seite an einem Anschlag der Welle angeordnet und mit der ersten Seite gegenüberliegenden zweiten Seite mittels einer Halteeinrichtung gehalten. Die Halteeinrichtung ist vorzugsweise am Abhitzekessel angeordnet.

Der Vorteil dieser Ausführungsform ist, dass das axiale Lager nicht im Kontakt mit dem Prozessgas steht.

In einer weiteren bevorzugten Ausführungsform der Anordnung umfasst die Anordnung eine kohlenwasserstoffhaltige Einsatzstoffquelle. Die Einsatzstoffquelle ist mit einem Edukteinlass des Reaktors verbunden. Über den Edukteinlass können die Reaktionsedukte dem Reaktor zugeführt werden.

In dieser Ausführungsform ist die Anordnung nicht nur dazu geeignet, mit kohlenwasserstoffhaltigen Reaktionsedukten betrieben zu werden. Vielmehr ist diese Verwendung in dieser Ausführungsform insoweit zwingend, als dass die Einsatzstoffquelle Teil der Anordnung ist. Als Einsatzstoffquelle kommt jedes Element in Betracht, welches Kohlenwasserstoffe abgibt.

Als ein weiterer Aspekt der Erfindung wird ein Verfahren zum Betrieb der Anordnung vorgestellt. Dabei wird Synthesegas für die Methanolsynthese in dem Reaktor erzeugt. Ein Prozessgasstrom des Reaktors wird in den Abhitzekessel geleitet. Eine Temperatur des Prozessgasstromes an einem Auslass des Abhitzekessels wird über die Temperaturregeleinrichtung reguliert, indem die Temperaturregeleinrichtung über den Stellantrieb eingestellt wird.

Die beschriebenen Vorteile und Merkmale der Anordnung sind auf das Verfahren anwendbar und übertragbar, und umgekehrt. Die Anordnung ist vorzugsweise zum Betrieb gemäß dem beschriebenen Verfahren eingerichtet.

Als ein weiterer Aspekt der Erfindung wird eine Verwendung vorgestellt. Die Anordnung wird dabei zur Erzeugung eines Synthesegases für die Methanolsynthese in dem

Reaktor verwendet. Vorzugsweise umfasst das erzeugte Synthesegas Wasserstoff und/oder Kohlenmonoxid.

Besonders bevorzugt kann das Synthesegas zu Methanol umgesetzt werden.

Die beschriebenen Vorteile und Merkmale der Anordnung und des Verfahrens sind auf die Verwendung anwendbar und übertragbar, und umgekehrt. Die Anordnung ist vorzugsweise dazu eingerichtet, gemäß der Verwendung verwendet zu werden.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine schematische Ansicht einer erfindungsgemäßen Anordnung zur Methanolsynthese,
- Fig. 2:: eine detaillierte Ansicht einer Öffnung des Abhitzekessels der Anordnung in Fig. 1.

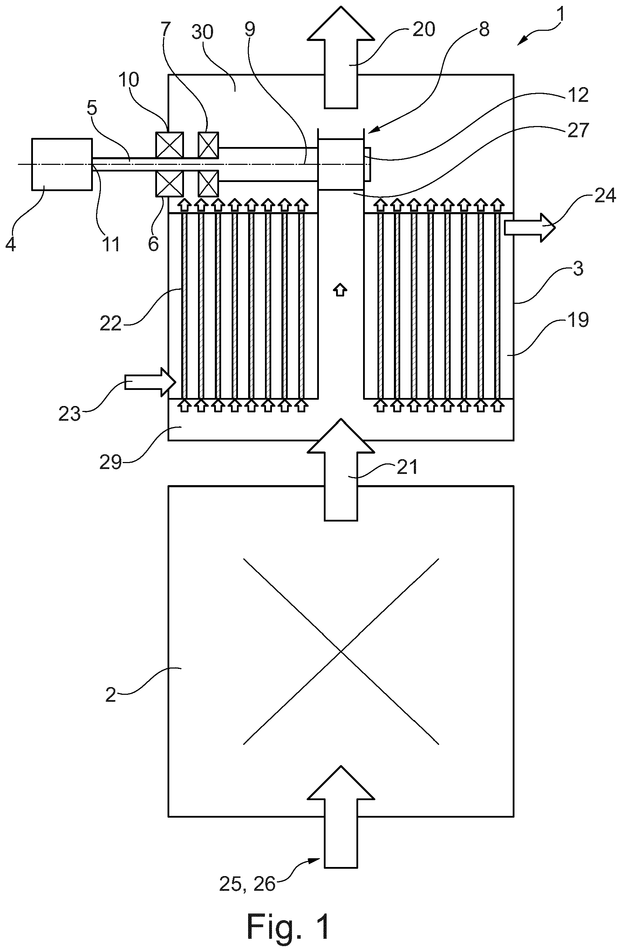

Fig. 1 zeigt eine schematische Ansicht einer erfindungsgemäßen Anordnung 1 zur Methanolsynthese. Die Anordnung 1 umfasst einen Reaktor 2, einen Abhitzekessel 3, einen Stellantrieb 4, eine Welle 5, ein Wellendichtelement 6, ein axiales Lager 7, und eine Temperaturregeleinrichtung 8. Die Anordnung 1 umfasst weiterhin eine kohlenwasserstoffhaltige Einsatzstoffquelle 25, die mit einem Edukteinlass 26 des Reaktors 2 verbunden ist.

Kohlenwasserstoffhaltiger Einsatzstoff wird in der Anordnung 1 in dem Reaktor 2 zu Synthesegas umgesetzt. Der Reaktor 2 ist für die kombinierte Reformierung geeignet. Das erzeugte Synthesegas wird zusammen mit nicht umgesetzten Einsatzstoff als ein Prozessgasstrom in den Abhitzekessel 3 geleitet. Eine Temperatur des Prozessgasstromes in einer Auslasskammer 30 des Abhitzekessels 3 wird über die Temperaturregeleinrichtung 8 reguliert, indem die Temperaturregeleinrichtung 8 über den Stellantrieb 4 eingestellt wird.

Der Reaktor 2 ist für endotherme und exotherme Reaktionen geeignet. Der Reaktor 2 ist dazu eingerichtet, Synthesegas aus der Einsatzstoffquelle 25 zu erzeugen.

Der Abhitzekessel 3 ist an den Reaktor 2 angebunden. Hierfür strömt ein Prozessgasstrom über einen Einlass 21 in eine Einlasskammer 29 des Abhitzekessel 3. Dieser Prozessgasstrom enthält Synthesegas.

Der Abhitzekessel 3 umfasst Wärmeübertragungsrohre 22. Der Abhitzekessel 3 weist Anschlüsse und Verbindungen auf, so dass die Wärmeübertragungsrohre 22 fluidtechnisch angeschlossen werden können. Von dem Einlass 21 wird der Prozessgasstrom über die Einlasskammer 29 auf die Wärmeübertragungsrohre 22 verteilt. Weiterhin weist der Abhitzekessel 3 Anschlüsse und Verbindungen auf, so dass in einen Mantelraum 19 außerhalb und zwischen den Wärmeübertragungsrohren 22 ein Kühlmittel in den Abhitzekessel 3 über einen Kühlmitteleinlass 23 eingeleitet und über einen Kühlmittelauslass 24 wieder abgeleitet werden kann.

Im Abhitzekessel 3 kann der Prozessgasstrom gekühlt werden. Der Prozessgasstrom kann beim Durchströmen der Wärmeübertragungsrohre 22 im Abhitzekessels 3 die Wärmeenergie über die Rohrwand der Wärmeübertragungsrohre 22 auf das Kühlmittel übertragen. Flüssiges Kühlmittel im Abhitzekessel 3 kann dabei verdampfen, so dass das Kühlmittel im Abhitzekessel 3 zweiphasig ist. Das Kühlmittel wird über den Kühlmittelauslass 24 aus dem Abhitzekessel 3 entfernt. Als Kühlmittel wird Wasser verwendet.

Die Welle 5, das Wellendichtelement 6 und das axiale Lager 7 sind auf einer gemeinsamen Achse 9 angeordnet. Der Abhitzekessel 3 weist eine Öffnung 10 auf, durch welche die Welle 5 unter Abdichtung durch das Wellendichtelement 6 hindurchgeführt ist. Der Stellantrieb 4 ist außerhalb des Abhitzekessels 3 angeordnet. Die Temperaturregeleinrichtung 8 hingegen ist innerhalb des Abhitzekessels 3 angeordnet. Der Stellantrieb 4 ist an einem ersten Ende 11 mit der Welle 5 gekoppelt. Der Stellantrieb 4 ist dazu eingerichtet, die Welle 5 rotatorisch anzutreiben. Die Temperaturregeleinrichtung 8 ist an einem zweiten Ende 12 mit der Welle 5 gekoppelt und ist dazu eingerichtet, durch rotatorische Bewegung der Welle 5 eingestellt zu werden.

Die Temperaturregeleinrichtung 8 umfasst ein Bypassrohr 27, womit zumindest ein Teil des teilgekühlten Prozessgasstroms getrennt von den Wärmeübertragungsrohren 22 geleitet werden kann. Der teilgekühlte Prozessgasstrom aus der Temperaturregeleinrichtung 8 kann mit dem durch die Wärmeübertragungsrohre 22 gekühlten Prozessgasstrom in der Auslasskammer 30 vermischt werden. Durch die Temperaturregeleinrichtung 8 kann die Temperatur des Prozessgasstroms am Auslass 20 des Abhitzekessels 3 eingestellt werden.

Das axiale Lager 7 ist dazu eingerichtet, einer Bewegung der Welle 5 in Richtung auf das erste Ende 11 der Welle 5 entgegenzuwirken. Das axiale Lager 7 ist innerhalb des Abhitzekessels 3 angeordnet. Dabei ist das axiale Lager 7 zwischen dem Wellendichtelement 6 und der Temperaturregeleinrichtung 8 angeordnet.

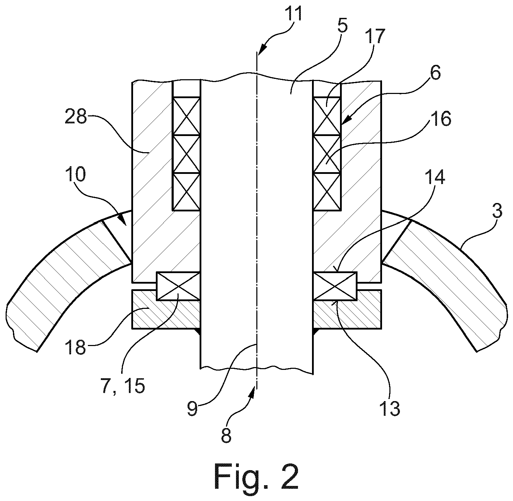

Fig. 2 zeigt eine detaillierte Ansicht einer Öffnung 10 des Abhitzekessels 3 der Anordnung in Fig. 1. Das Wellendichtelement 6 und das axiale Lager 7 sind voneinander beabstandet auf der Welle 5 angeordnet. Weiterhin ist das Wellendichtelement 6 in der Öffnung 10 des Abhitzekessels 3 angeordnet. Das axiale Lager 7 ist mit einer ersten Seite 13 an einem Anschlag 18 der Welle 5 angeordnet. Die Welle 5, das Wellendichtelement 6 und das axiale Lager 7 sind auf der gemeinsamen Achse 9 angeordnet. Mit einer der ersten Seite 13 gegenüberliegenden zweiten Seite 14 ist das axiale Lager 7 über eine Buchse 28 an dem Abhitzekessel 3 gehalten. Das Wellendichtelement 6 ist als eine Stopfbuchse ausgestaltet. Das Wellendichtelement 6 umfasst eine Stopfbuchspackung 16 und eine Stopfbuchsbrille 17, wobei ein Freiraum zwischen der Welle 5 und der Buchse 28 über die Stopfbuchspackung 16 abgedichtet ist. Das axiale Lager 7 ist dazu eingerichtet, einer Bewegung der Welle 5 in Richtung auf das erste Ende 11 der Welle 5 entgegenzuwirken. Das axiale Lager 7 ist innerhalb des Abhitzekessels 3 angeordnet. Dabei ist das axiale Lager 7 zwischen dem Wellendichtelement 6 und der Temperaturregeleinrichtung 8 angeordnet. Das axiale Lager 7 ist als ein Wälzlager ausgestaltet mit Wälzkörpern 15 zwischen der ersten Seite 13 und der zweiten Seite 14. Eine Kraft ist von der ersten Seite 13 über die Wälzkörper 15 auf die zweite Seite 14 und damit auf den Abhitzekessel 3 übertragbar.

### Bezugszeichenliste

- 1: Anordnung
- 2: Reaktor
- 3: Abhitzekessel
- 4: Stellantrieb
- 5: Welle
- 6: Wellendichtelement
- 7: axiales Lager
- 8: Temperaturregeleinrichtung
- 9: Achse
- 10: Öffnung
- 11: erstes Ende
- 12: zweites Ende
- 13: erste Seite
- 14: zweite Seite
- 15: Wälzkörper
- 16: Stopfbuchspackung
- 17: Stopfbuchsbrille
- 18: Anschlag
- 19: Mantelraum
- 20: Auslass
- 21: Einlass
- 22: Wärmeübertragungsrohre
- 23: Kühlmitteleinlass
- 24: Kühlmittelauslass
- 25: Einsatzstoffquelle
- 26: Edukteinlass
- 27: Bypassrohr
- 28: Buchse
- 29: Einlasskammer
- 30: Auslasskammer

## Patentansprüche

1. Anordnung (1) umfassend
• einen Reaktor (2),
• einen Abhitzekessel (3),
• einen Stellantrieb (4),
• eine Welle (5),
• ein Wellendichtelement (6),
• ein axiales Lager (7), und
• eine Temperaturregeleinrichtung (8),
wobei der Abhitzekessel (3) an den Reaktor (2) angebunden ist,
wobei die Welle (5), das Wellendichtelement (6) und das axiale Lager (7) auf einer gemeinsamen Achse (9) angeordnet sind,
wobei der Abhitzekessel (3) eine Öffnung (10) aufweist, durch welche die Welle (5) unter Abdichtung durch das Wellendichtelement (6) hindurchgeführt ist,
wobei der Stellantrieb (4) außerhalb des Abhitzekessels (3) angeordnet ist,
wobei die Temperaturregeleinrichtung (8) innerhalb des Abhitzekessels (3) angeordnet ist,
wobei der Stellantrieb (4) an einem ersten Ende (11) mit der Welle (5) gekoppelt ist,
wobei der Stellantrieb (4) dazu eingerichtet ist, die Welle (5) rotatorisch anzutreiben,
wobei die Temperaturregeleinrichtung (8) an einem zweiten Ende (12) mit der Welle (5) gekoppelt ist und dazu eingerichtet ist, durch rotatorische Bewegung der Welle (5) eingestellt zu werden,
wobei das axiale Lager (7) dazu eingerichtet ist, einer Bewegung der Welle (5) in Richtung auf das erste Ende (11) der Welle (5) entgegenzuwirken.

2. Anordnung (1) nach Anspruch 1, wobei das axiale Lager (7) innerhalb des Abhitzekessels (3) angeordnet ist, und
wobei das axiale Lager (7) zwischen dem Wellendichtelement (6) und der Temperaturregeleinrichtung (8) angeordnet ist.

3. Anordnung (1) nach Anspruch 1, wobei das axiale Lager (7) außerhalb des Abhitzekessels (3) angeordnet ist, und wobei das axiale Lager (7) zwischen Stellantrieb (4) and Wellendichtelement (6) angeordnet ist.

4. Anordnung (1) nach einem der vorhergehenden Ansprüche, wobei das Wellendichtelement (6) und das axiale Lager (7) voneinander beabstandet auf der Welle (5) angeordnet sind.

5. Anordnung (1) nach einem der vorhergehenden Ansprüche,
wobei das Wellendichtelement (6) in der Öffnung (10) des Abhitzekessels (3) angeordnet ist.

6. Anordnung (1) nach einem der vorhergehenden Ansprüche,
wobei das axiale Lager (7) mit einer ersten Seite (13) an einem Anschlag (18) der Welle (5) angeordnet ist und mit einer der ersten Seite (13) gegenüberliegenden zweiten Seite (14) mittels des Abhitzekessels (3) gehalten ist.

7. Anordnung (1) nach einem der vorhergehenden Ansprüche, wobei das Wellendichtelement (6) eine Stopfbuchse ist, umfassend eine Stopfbuchspackung (16) und eine Stopfbuchsbrille (17), wobei ein Freiraum zwischen der Welle (5) und der einer Buchse (28) über die Stopfbuchspackung (16) abgedichtet ist.

8. Anordnung (1) nach einem der vorhergehenden Ansprüche, umfassend eine kohlenwasserstoffhaltige Einsatzstoffquelle (25), welche mit einem Edukteinlass (26) des Reaktors (2) verbunden ist.

9. Verfahren zum Betrieb einer Anordnung (1) nach einem der vorhergehenden Ansprüche, wobei Synthesegas für die Methanolsynthese in dem Reaktor (2) erzeugt wird, wobei ein Prozessgasstrom des Reaktors (2) in den Abhitzekessel (3) geleitet wird, wobei eine Temperatur des Prozessgasstromes an einem Auslass (20) des Abhitzekessels (3) über die Temperaturregeleinrichtung (8) reguliert wird, indem die Temperaturregeleinrichtung (8) über den Stellantrieb (4) eingestellt wird.

10. Verwendung der Anordnung (1) nach einem der Ansprüche 1 bis 8 zur Erzeugung eines Synthesegases für die Methanolsynthese in dem Reaktor (2).
